# FASCICULE DE BREVET EUROPEEN

(11) **EP 2 217 906 B1**
(45) Date de publication et mention de la délivrance du brevet: **19.02.2020**
(21) Numéro de dépôt: 08861045.6
(22) Date de dépôt: 09.12.2008
(51) Int. Cl.: G01Q 70/12, D01F 9/127

(54) **PROCÉDÉ DE FABRICATION COLLECTIVE DE NANOFIBRES DE CARBONE A LA SURFACE DE MICROMOTIFS ÉLABORÉS A LA SURFACE D'UN SUBSTRAT**
VERFAHREN ZUR MASSENHERSTELLUNG VON KOHLENSTOFFNANOFASERN AUF DER OBERFLÄCHE VON AUF EINER SUBSTRATOBERFLÄCHE GEFORMTEN MIKROSTRUKTUREN
METHOD FOR COLLECTIVE PRODUCTION OF CARBON NANOFIBRES AT THE SURFACE OF MICRO-PATTERNS FORMED ON A SUBSTRATE SURFACE

(30) Priorité: 14.12.2007 FR 0708739
(43) Date de publication de la demande: 18.08.2010
(73) Titulaire: Commissariat à l'Énergie Atomique et aux Énergies Alternatives, 75015 Paris (FR)
(72) Inventeur: GORINTIN, Louis, 92120 Montrouge (FR); DIJON, Jean, 38800 Champagnier (FR); LE POCHE, Hélène, 38000 Grenoble (FR); MARIOLLE, Denis, 38100 Grenoble (FR)
(74) Mandataire: Esselin, Sophie
(86) Numéro de dépôt international: PCT/EP2008/067145
(87) Numéro de publication internationale: WO 2009/077388

(56) Documents cités:
- JP-A- 2003 090 788
- JP-A- 2004 182 537
- US-A1- 2003 143 327
- US-A1- 2004 036 403
- US-A1- 2004 060 902
- US-B1- 6 780 664
- E.F. KUKOVITSKY ET AL: "Correlation between metal catalyst particle size and carbon nanotube growth", CHEMICAL PHYSICS LETTERS, vol. 355, no. 5-6, 8 April 2002 (2002-04-08), pages 497-503, XP55455108, NL ISSN: 0009-2614, DOI: 10.1016/S0009-2614(02)00283-X

## Description

Le domaine de l'invention est celui des nanofibres et notamment des nanofibres de carbone et de silicium et concerne plus précisément un procédé d'intégration collectif et original de ces nanofibres.

L'invention vise notamment à ajouter une ou plusieurs nanofibres (carbone ou silicium) à l'extrémité de pointe pour microscopes en champ proche (*SPM, Scanning Probe Microscope*) en contrôlant :
- la localisation de la croissance par localisation du catalyseur à l'extrémité de micromotifs,
- la rigidité de la nanofibre pour qu'elle soit utilisable en microscopie à force atomique, c'est-à-dire qu'elle ne se déforme pas lors de la mesure,
- les dimensions et la forme cylindrique de la nanofibre avec un diamètre de l'ordre de 20 à 50 nm et une longueur comprise entre 200 nm et 500 nm,
- le nombre de nanofibres de carbone par ajustement de la taille des micromotifs,
- l'orientation des nanofibres de carbone par un procédé de croissance RF-PECVD,
- les croissances parasites de nanofibres de carbone par l'ajout d'une couche poison.

Les nanofibres localisées à l'extrémité de pointes pour SPM permettent notamment d'effectuer des mesures électriques et/ou mécaniques locales. Elles sont également utilisables dans le domaine de la biologie pour de la reconnaissance spécifique après greffage d'entités sur la pointe.

### Etat de l'art :

Selon l'art connu il a déjà été proposé un procédé de fabrication de nanosupport pour la croissance de nanofibres : Minh et al., J. Vac. Sci. Technol. B 21(4) 1705 (2003) « Selective growth of carbon nanotubes on Si microfabricated tips and application for electron field emitters ». Un tel procédé permet la fabrication de pointes en Si à fort rapport d'aspect en utilisant le dépôt collectif de catalyseur à base de Fer et la croissance « HF-CVD » pour « Hot Filament Chemical Vapor Déposition », de nanotube de carbone individuel à l'extrémité de la pointe obtenu grâce aux caractéristiques locales du champ électrique. Les nanotubes de carbone sont orientés dans l'axe de la pointe. Cependant il demeure avec ce procédé un problème au niveau du contrôle de la longueur du nanotube, son orientation et sa tenue mécanique.

Il est également connu selon, H. Cui, Patent US20060138077 A1 (2006) *« Method of making an angled tip for a scanning force microscope »,* la fabrication d'une pointe SPM pour « Scanning Probe Microscopy », inclinée (nanotube de carbone mono ou multiparoi, nanofibre de carbone ou nanofibre cristalline...) sur un levier. Un plot de catalyseur est réalisé à l'extrémité du levier par différentes étapes de lithographie. Cette localisation du catalyseur empêche toute croissance parasite. La croissance est obtenue par « DC-PECVD ». La perturbation des lignes de champ à l'extrémité du levier permet d'obtenir une croissance orientée d'une pointe SPM.

Il est également connu d'effectuer dans le brevet US 7032437 B2, l'usinage par faisceau d'ions du méplat conduisant à un procédé de croissance non collectif.
- Le catalyseur est gravé, cependant la gravure peut poser problème en raison de la désactivation de l'activité catalytique.
- Le contrôle d'angle n'est pas possible : en effet, le dépôt en « biais » du catalyseur n'assure pas le contrôle de la forme en coin (triangle, pointe) du catalyseur. D'autre part, durant les étapes de croissance, qui se font à hautes températures (T>600°C), la réorganisation du catalyseur ne permet pas de conserver cette forme. Ce procédé permet de réaliser des objets coniques de diamètre supérieur à 100 nm, ce qui conduit à une forme imposée ne permettant pas de concentrer fortement les lignes de champ, les formes cylindriques étant plus favorables pour assurer cette fonction.

Il est également connu de la demande de brevet JP 2004 182537 un procédé de croissance de nanocarbone comportant la réalisation de motifs présentant des parois inclinées, comprenant une couche optionnelle présente au sommet des motifs pour favoriser l'adhérence du catalyseur.

Il est également connu de la demande de brevet US 2004/0036403 un procédé de croissance dans lequel sont présentes des couches à l'endroit de la croissances des nanotubes. Il est encore connu du brevet US 6,780,664 un procédé dans lequel des micro-motifs sont réalisés à la surface d'un substrat pour réaliser la croissance de nanotubes et utilisant des films d'adhésion et de catalyseur.

Il est aussi connu de la demande de brevet US 2003/0143327 de réaliser des micro-motifs à la surface d'un substrat destinés à la croissance de nanotubes. Le procédé décrit l'utilisation d'un film de catalyseur et des procédés pour en circonscrire la zone de croissance des nanotubes.

Il est encore décrit dans la demande de brevet JP 2003 09788 un procédé de croissance orientée de nanotubes à la surface de micro-motifs recouverts d'un film de catalyseur. L'ensemble de ces documents n'enseigne pas l'apport de couche additionnelle assurant une autre fonction de type couche « poison ».

Dans ce contexte l'invention propose un procédé de croissance d'une nanofibre et avantageusement d'un ensemble de nanofibres permettant de maîtriser la croissance des nanofibres à l'extrémité de motifs préfabriqués dénommés ci-après micromotifs, de façon collective respectant les conditions suivantes :
- la localisation de la croissance individuelle sans gravure du catalyseur ;
- l'élimination de croissance parasite ;
- l'orientation contrôlée par rapport à l'axe du motif microfabriqué et celui du support de ce motif.

L'invention a ainsi pour objet un procédé de fabrication de nanofibre à la surface d'un substrat comportant la fabrication préalable de micromotif de géométrie particulière. Avantageusement, le procédé de l'invention est un procédé collectif permettant de fabriquer simultanément un ensemble de nanofibres.

Plus précisément, l'invention concerne un procédé de fabrication de nanofibre selon la revendication 1.

Selon une variante de l'invention, la réalisation de micromotif comporte les étapes suivantes :
- le dépôt d'une couche de matériau dit masque dur présentant un comportement à la gravure sèche différent de celui du substrat ;
- le dépôt d'une couche de matériau photorésistif capable de devenir insoluble sous l'effet d'une insolation à la surface dudit masque dur;
- l'insolation au travers d'un masque dudit matériau photorésisitif de manière à définir une partie insoluble au sein de la couche de matériau photosensible ;
- la dissolution de la couche de matériau photorésistif en périphérie de la partie insoluble de manière à définir un élément insoluble;
- la gravure du masque dur en périphérie de l'élément insoluble de manière à définir un plot de gravure ;
- la gravure du substrat conduisant à la réalisation d'un micromotif à la surface du substrat recouvert en face supérieure du plot de gravure.

Le procédé comprend la réalisation d'un dépôt de couche « poison » sur la base du micromotif suivie du dépôt d'une couche de catalyseur sur l'ensemble du substrat recouvert du micromotif en sa base par ladite couche poison.

L'invention repose ainsi sur les caractéristiques suivantes :
- la réalisation d'au moins un motif microfabriqué présentant une base, des parois latérales au moins partiellement convergentes et une face supérieure, la base étant couverte d'une couche « poison » ;
- le dépôt d'une couche de catalyseur sur l'ensemble du motif microfabriqué encore appelé micromotif ;
- le démouillage de la couche de catalyseur permettant la formation de plot de catalyseur localisé de manière contrôlée par exemple par une technique de chauffage ;
- la croissance de nanofibre de carbone sur cet ensemble par une technique de type PECVD.

L'épaisseur de la couche « poison » ainsi que l'épaisseur de la couche de catalyseur, sont telles que des nanofibres de carbone, ne peuvent croître ni sur les parois latérales ni sur la base des micromotifs préalablement élaborés.

Typiquement, la couche de catalyseur présente une épaisseur inférieure à environ quelques dizaines de nanomètres permettant ainsi l'opération de démouillage, voire une cinquantaine de nanomètres.

Selon une variante, les dimensions de section de micromotif sont de l'ordre de quelques centaines de nanomètres.

Selon une variante de l'invention, la couche de masque dur est en nitrure de type nitrure NiₓSi_{y}.

Selon une variante de l'invention, la couche « poison » est dans un même matériau que la couche de catalyseur et présente une épaisseur supérieure à une cinquantaine de nanomètres.

Avantageusement, la couche « poison » est une couche en cuivre ou en molybdène ou en tungstène.

Avantageusement, la couche de catalyseur est une couche de nickel ou de fer ou de cobalt ou un alliage palladium nickel.

L'invention sera mieux comprise et d'autres avantages apparaîtront à la lecture de la description qui va suivre donnée à titre non limitatif et grâce aux figures annexées parmi lesquelles :
- les figures 1a à 1h illustrent les différentes sous-étapes dans la formation de micromotifs à la surface d'un substrat dans un premier exemple de procédé de fabrication de nanofibre selon l'invention;
- la figure 2 illustre l'étape de dépôt d'une couche de catalyseur à la surface des micromotifs formés selon le premier exemple de procédé de fabrication de nanofibre selon l'invention ;
- la figure 3 illustre l'étape d'opération de démouillage utilisée dans le procédé de fabrication selon l'invention, permettant de localiser des plots de catalyseur à la surface des micromotifs formés préalablement ;

- les figures 4a et 4b illustrent l'étape de croissance de nanofibre à la surface de plot de catalyseur réalisée respectivement selon deux directions différentes dans un procédé de fabrication selon l'invention ;
- la figure 5 illustre un schéma en coupe transversale d'un exemple d'enceinte de dépôt permettant de réaliser la croissance de nanofibre dans un procédé de l'invention ;
- la figure 6 illustre une seconde variante du procédé de l'invention comportant la réalisation de micromotif rehaussé servant à la croissance de nanofibre dans un procédé de fabrication selon l'invention.

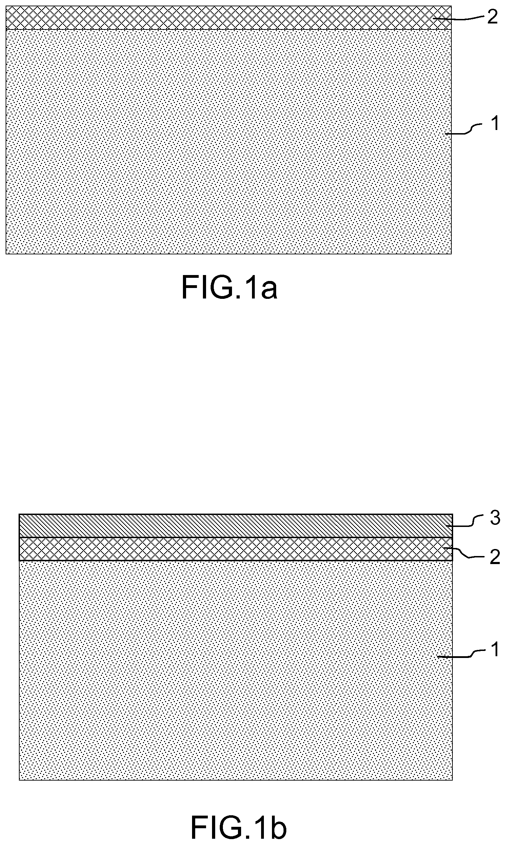

Nous allons décrire plus en détails ci-après les différentes étapes du procédé de croissance de nanofibre selon l'invention, illustré par les figures 1a à 1h et concernant la réalisation d'une nanofibre mais pouvant être tout aussi bien généralisé à un procédé de réalisation collectif de nanofibres :

### Etape A : Réalisation de micromotif :

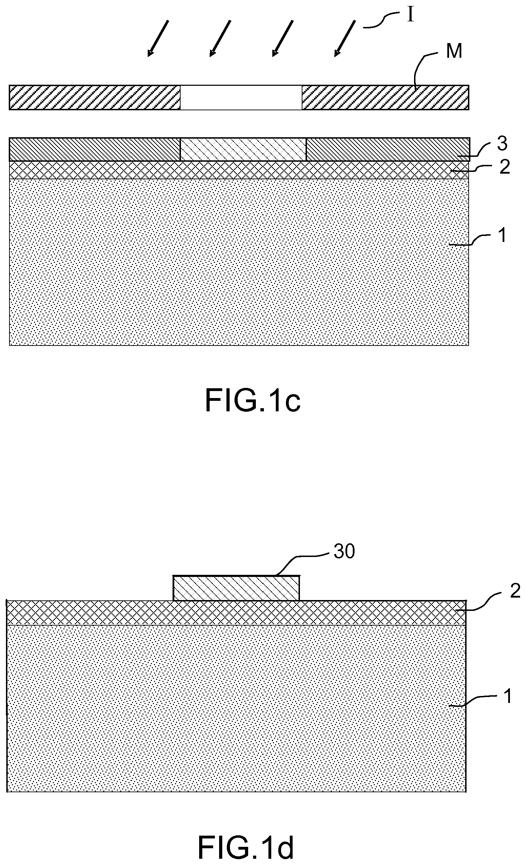

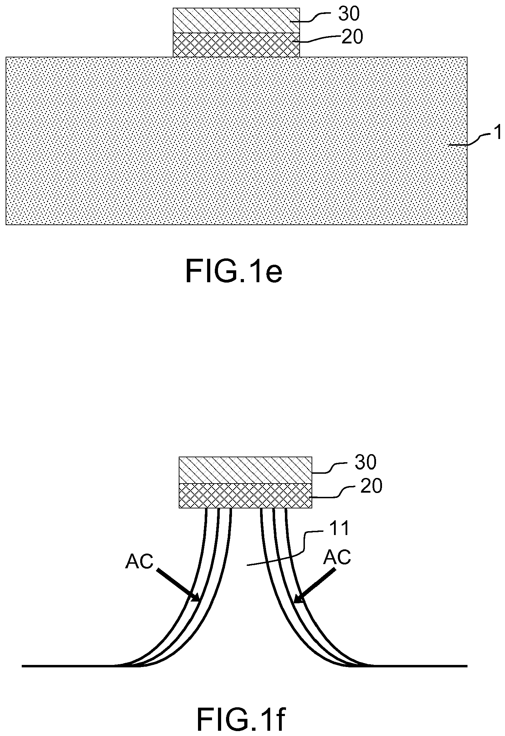

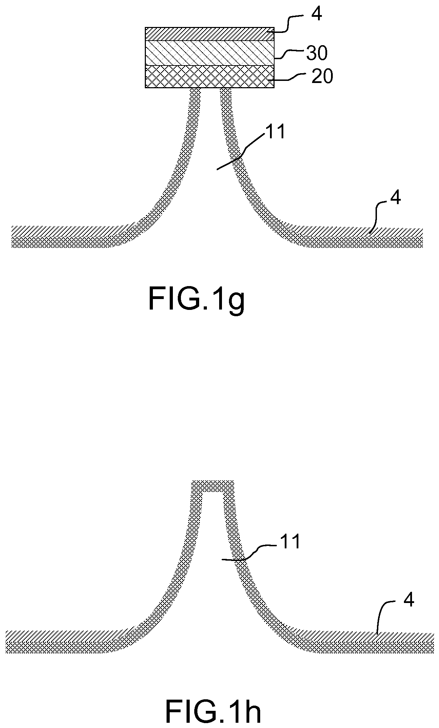

- sur un substrat 1 pouvant être de type Si, on dépose un masque dur 2 de type silice Si0₂ et ou de type nitrure SiₓN_{y}, présentant un comportement en terme de gravure différent de celui du substrat. La figure 1a illustre l'empilement du substrat 1 recouvert du masque de gravure 2 ;
- on dépose ensuite une couche photorésistive 3 de type résine, comme illustré en figure 1b ;
- au travers d'un cache photographique M ou procède à une opération d'insolation schématisée par la référence I comme représenté en figure 1c. L'insolation a pour fonction de rendre insoluble ladite couche photorésistive ;
- on retire le reste de la couche photorésistive en la dissolvant par exemple, comme illustré en figure 1d pour ne laisser que l'élément insolé insoluble 30 ;
- on réalise ensuite une opération de gravure anisotrope permettant d'éliminer la couche de matériau 2, non protégée comme représenté en figure 1e, pour faire apparaître un motif 20 supportant le motif 30 ;
- une seconde attaque chimique schématisée par la référence AC, est effectuée ensuite, permettant de réaliser le motif recherché dénommé micromotif 11, correspondant à un méplat issu de la gravure du substrat, de taille contrôlée typiquement pouvant être de l'ordre de 100 à 500 nm, et dépendant de la durée de l'attaque chimique, comme illustré en figure 1f ; la taille du méplat est déterminée de façon a n'obtenir qu'une goutte de catalyseur calibrée. Cette taille détermine le diamètre et le nombre de fibres obtenues en bout de pointe ;
- on dépose alors une couche 4 dite « poison », pouvant être typiquement une couche de catalyseur, empêchant tout mouillage ultérieur (pouvant être par exemple une couche en nickel d'épaisseur environ une centaine de nanomètres) ou bien être une couche pouvant annihiler l'effet d'un catalyseur déposé ultérieurement dans le procédé de croissance selon l'invention (pouvant être par exemple une couche en cuivre ou en molybdène), comme représenté en figure 1g ;
- le micromotif 11 peut ensuite être dégagé en procédant au retrait des éléments 20 et 30 recouverts de la couche 4, par une révélation de type Lift-Off. Le micromotif ainsi élaboré présente une base recouverte d'une couche « poison » 4, des parois latérales convergentes et une face supérieure comme illustré en figure 1h.

### Etape B : Dépôt d'une couche de catalyseur

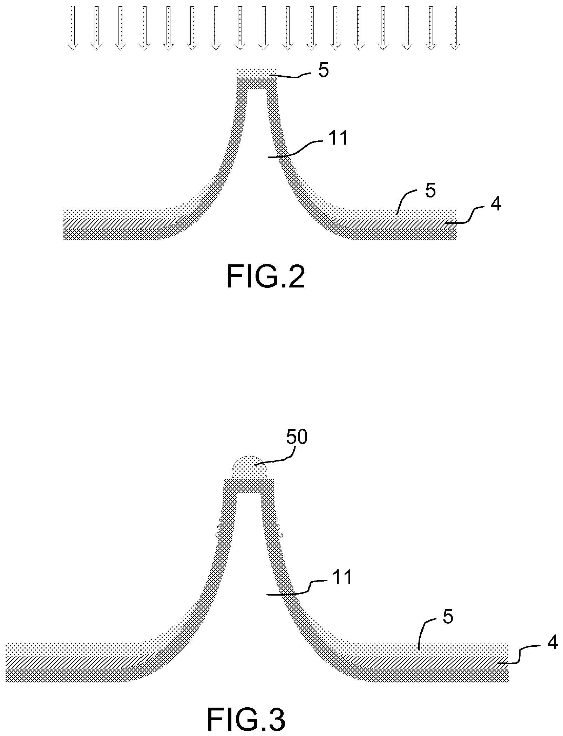

Une couche de catalyseur est déposée sur le micromotif élaboré précédemment. Il peut s'agir de catalyseur de type nickel, fer, cobalt, platine, molybdène,..., présentant typiquement une épaisseur de 1 à 20 nm ; le dépôt de catalyseur étant homogène, l'épaisseur déposée sur une surface inclinée est moindre que sur une surface plane (diminuée du rapport de la section efficace sur la surface réelle). Cette opération peut typiquement être effectuée par pulvérisation cathodique encore dénommée couramment opération de « sputtering », ou par évaporation (par ablation laser notamment) ou bien encore par dépôt chimique de type « CVD » pour chemical vapor déposition, « LPCVD » pour low pressure chemical vapor déposition, « PECDV » pour Plasma Enhanced Chemical Vapor Deposition. La couche de catalyseur 5 est mise en évidence sur la figure 2, en superposition de la couche « poison » 4, sur le micromotif 11. Les flèches verticales schématisent le procédé de type pulvérisation cathodique.

### Etape C : Opération de démouillage

L'étape de démouillage est un point clé de l'invention. Afin de mettre en goutte le catalyseur à la surface du micromotif, la température de la chambre dans laquelle est placé le substrat sur lequel a été réalisé le micromotif, est portée à une température supérieure à 300 degrés et pouvant atteindre 800 degrés (faisant varier la taille et la cinétique de mise en goutte du catalyseur), le temps que la goutte de catalyseur puisse se former.

La taille des fibres est directement liée à celle des gouttes et dépend de l'épaisseur et du type de catalyseur utilisé, du type et de l'état de surface dudit catalyseur. La taille de la goutte sur les parois latérales d'un micromotif est plus petite que celle à la surface supérieure dudit micromotif car l'épaisseur déposée y est plus faible, comme illustré en figure 3 qui montre une goutte de catalyseur 50, à la surface d'un micromotif 11, dont la base est recouverte de la couche « poison » 4 et de la couche de catalyseur 5.

### Etape D : Croissance de nanofibre

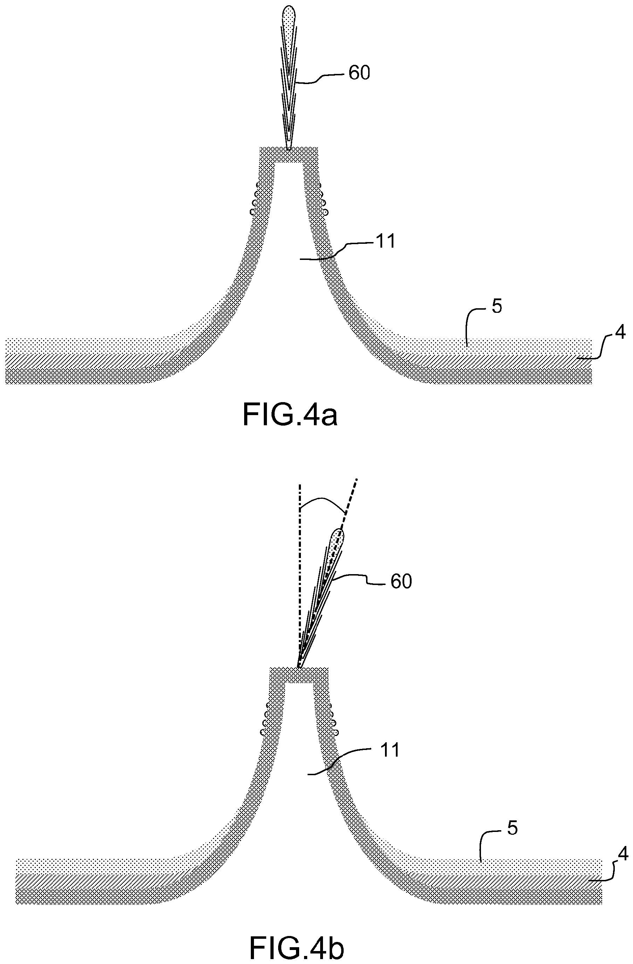

Selon le procédé de l'invention, on peut procéder à la croissance de nanofibre à la surface de la goutte de catalyseur déposée sur le micromotif. Cette opération de croissance est de manière classique effectuée par « PECVD », l'orientation de ladite nanofibre 60 peut ainsi être maîtrisée, comme illustré en figure 4a.

Avec le procédé de l'invention, la croissance orientée est rendue possible, indépendamment de l'orientation du plan du micromotif. Pour certaines applications, il peut être avantageux de contrôler précisément l'inclinaison et la longueur de la nanofibre 60, et ainsi réaliser des nanofibres telles que celle illustrée en figure 4b.

Nous allons décrire ci-après plus en détails, le procédé de croissance des nanofibres.

Avantageusement, ce procédé peut être effectué dans une enceinte de dépôt, présentant une première électrode appelée cathode et une deuxième électrode appelée anode, lesdites électrodes étant placées en vis-à-vis. Un générateur RF, connecté en série avec un condensateur permet de fournir une tension RF entre les électrodes. Une des électrodes supporte en empilement, sur sa face située en regard de l'anode, une cible en graphite et un échantillon destiné à recevoir un dépôt de nanofibres.

Dans l'enceinte, on réalise un plasma chargé en ions, la cible fournissant l'apport en carbone. L'échantillon comporte, sur sa face libre, les micromotifs comportant en surface des plots localisés de catalyseur.

La croissance localisée de nanofibres à la surface des plots de catalyseur peut typiquement être opérée à une température supérieure à 300 degrés.

Le plasma est réalisé à partir d'hydrogène pur ou d'un mélange gazeux à base d'hydrogène. Typiquement, les autres gaz du mélange peuvent être de l'azote ou un ou plusieurs gaz rares choisis par exemple parmi l'hélium, l'argon, le krypton ou bien encore le xénon.

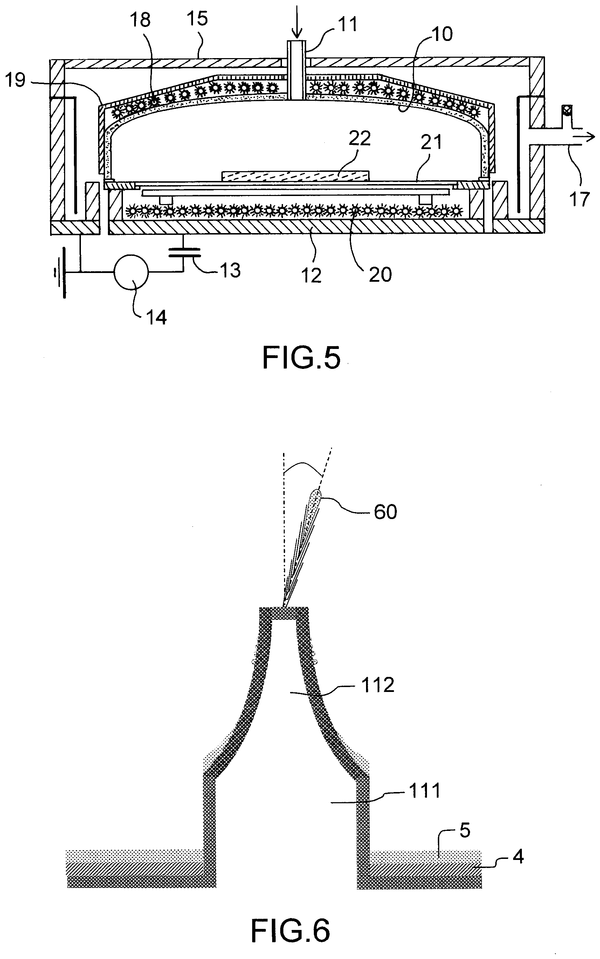

La figure 5 illustre un schéma en coupe transversale d'un exemple d'enceinte de dépôt permettant de réaliser ce type de croissance. Dans une enceinte, une cloche par exemple en quartz 10 permet de limiter la zone réactionnelle dans laquelle le plasma est réalisé. Cette cloche 10 permet l'introduction de gaz par une entrée de gaz 11. La cloche repose sur une sole 12 isolée électriquement d'un bâti 15. Un générateur RF 14, connecté en série avec un condensateur 13 permet de fournir une tension RF entre le bâti 15, servant d'anode et la sole 12, servant de cathode. Une sortie de gaz 17 permet de pomper l'intérieur du bâti 15. Un premier dispositif de chauffage 18 est disposé au-dessus de la cloche 10 et sous un réflecteur thermique 19. Un deuxième dispositif de chauffage 20 peut également être prévu, placé en position basse et permettant de chauffer une cible en graphite 21. La cible 21 repose sur la sole 12 et supporte le substrat 22 comportant les micromotifs et les plots de catalyseur. La cible et le substrat sont au même potentiel.

Selon une variante de l'invention, il est également possible de réaliser des micromotifs complexes, considérés comme réhaussés par rapport au substrat. Pour cela, le procédé de l'invention dans cette variante comporte une étape de gravure sèche postérieure à l'opération d'attaque chimique de manière à constituer un micromotif dit réhaussé par rapport au substrat. Il peut notamment s'agir d'une opération intermédiaire de gravure par exemple de type R.I.E., sur les micromotifs préalablement réalisés tels qu'illustrés en figure 1f et ce avant l'opération de révélation de type Lift-off. Selon cette variante, on peut ainsi obtenir une croissance de nanofibre à la surface du micromotif réhaussé tel qu'illustré en figure 6 qui met en évidence un micromotif comportant une première partie 111 présentant des parois latérales droites et une seconde partie 112 présentant des parois convergentes.

## Revendications

1. Procédé de fabrication de nanofibre comprenant la croissance de nanofibre à partir de plot de catalyseur comportant en outre les étapes suivantes :
- la réalisation d'au moins un micromotif (11) à la surface d'un substrat (1), ledit motif comprenant une base, des parois latérales au moins partiellement convergentes et une face supérieure;
- la réalisation d'un plot de catalyseur (50) à la surface dudit micromotif ;
- la croissance de nanofibre à partir dudit plot de catalyseur, ledit procédé comportant en outre les étapes de:
- le dépôt d'une couche dite « poison » (4), ladite couche dite « poison » étant une couche de catalyseur, empêchant tout mouillage ultérieur ou une couche pouvant annihiler l'effet d'un catalyseur déposé ultérieurement dans le procédé de croissance, au dessus de ladite base et au niveau de laquelle aucun effet de catalyse de croissance de nanofibre ne peut être réalisé ;
- le dépôt d'une couche de catalyseur (5) au dessus de ladite face supérieure et au dessus de ladite couche dite « poison » (4) au niveau de ladite base, la couche dite « poison » n'étant pas présente au niveau de ladite face supérieure et l'épaisseur de la couche « poison » ainsi que l'épaisseur de la couche de catalyseur étant telles que les nanofibres, ne peuvent croître ni sur les parois latérales ni sur la base des micromotifs préalablement élaborés ;
- une opération de démouillage permettant de mettre en goutte (50) au dessus de ladite face supérieure le catalyseur par chauffage du substrat comportant le micromotif recouvert de la couche de catalyseur et de la couche dite « poison » ;
- une opération de croissance de nanofibre à la surface de la goutte de catalyseur, la couche dite « poison » étant présente au niveau de ladite base.

2. Procédé de fabrication de nanofibre selon la revendication 1, **caractérisé en ce que** la réalisation du micromotif comporte les étapes suivantes :
- le dépôt d'une couche de matériau dit masque dur (2) présentant un comportement à la gravure sèche différent de celui du substrat ;
- le dépôt d'une couche de matériau photorésitif (3) capable de devenir insoluble sous l'effet d'une insolation à la surface dudit masque dur;
- l'insolation au travers d'un masque (M) dudit matériau photorésistif de manière à définir une partie insoluble au sein de la couche de matériau photorésistif ;
- la dissolution de la couche de matériau photorésistif en périphérie de la partie insoluble de manière à définir un élément insoluble (30) ;
- la gravure du masque dur en périphérie de l'élément insoluble de manière à définir un plot de gravure (20) ;
- la gravure du substrat conduisant à la réalisation d'au moins un micromotif (11) à la surface du substrat recouvert en face supérieure du plot de gravure (20) et de l'élément insoluble (30);

3. Procédé de fabrication de nanofibre selon la revendication 2, **caractérisé en ce que** la gravure du masque dur est une gravure anisotrope.

4. Procédé de fabrication de nanofibre selon l'une des revendications 2 ou 3, **caractérisé en ce que** la gravure du substrat est une opération de gravure chimique.

5. Procédé de fabrication de nanofibre selon la revendication 4, **caractérisé en ce que** la réalisation de micromotif comporte une étape de gravure sèche postérieure à l'opération d'attaque chimique de manière à constituer un micromotif dit rehaussé par rapport au substrat, ledit micromotif présentant une première partie (111) présentant des parois latérales droites et une seconde partie (112) présentant des parois latérales convergentes.

6. Procédé de fabrication de nanofibres selon la revendication 5, **caractérisé en ce que** l'opération intermédiaire de gravure sèche est une gravure de type R.I.E.

7. Procédé de fabrication de nanofibre selon la revendication 6, **caractérisé en ce que** l'épaisseur de la couche de catalyseur est inférieure à quelques dizaines de nanomètres.

8. Procédé de fabrication de nanofibre selon la revendication 7, **caractérisé en ce que** l'épaisseur de la couche de catalyseur est inférieure à une cinquantaine de nanomètres.

9. Procédé de fabrication de nanofibre selon l'une des revendications 7 ou 8, **caractérisé en ce que** la couche « poison » est dans un même matériau que la couche de catalyseur et présente une épaisseur supérieure à une cinquantaine de nanomètres.

10. Procédé de fabrication de nanofibre selon l'une des revendications 1 à 9, **caractérisé en ce que** les dimensions de section du micromotif sont de quelques centaines de nanomètres.

11. Procédé de fabrication de nanofibre selon l'une des revendications 1 à 10, **caractérisé en ce que** l'opération de chauffage est réalisée à une température comprise entre 300 degrés et 800 degrés.

12. Procédé de fabrication de nanofibre selon l'une des revendications 1 à 11, **caractérisé en ce que** le substrat est en silicium.

13. Procédé de fabrication de nanofibre selon l'une des revendications 2 à 12, **caractérisé en ce que** la couche de masque dur est en silice.

14. Procédé de fabrication de nanofibre selon l'une des revendications 2 à 12, **caractérisé en ce que** la couche de masque dur est en nitrure de type nitrure NiₓSi_{y}.

15. Procédé de fabrication de nanofibre selon l'une des revendications 1 à 14, **caractérisé en ce que** la couche « poison » est une couche en nickel d'épaisseur supérieure à quelques dizaines de nanomètres.

16. Procédé de fabrication de nanofibre selon l'une des revendications 1 à 14, **caractérisé en ce que** la couche « poison » est une couche en cuivre ou en molybdène ou en tungstène.

17. Procédé de fabrication de nanofibre selon l'une des revendications 1 à 16, **caractérisé en ce que** la couche de catalyseur est une couche de nickel ou de fer ou de cobalt ou un alliage palladium nickel.

## Patentansprüche

1. Verfahren zur Herstellung von Kohlenstofffasern, beinhaltend das Wachstum von Nanofasern aus einem Katalysatorhöcker, zudem folgende Schritte beinhaltend:
- die Herstellung von mindestens einem Mikromuster (11) an der Oberfläche eines Substrates (1), wobei das Muster eine Basis, seitliche Wände, welche mindestens teilweise konvergieren und eine obere Seite beinhaltet;
- Herstellen eines Höckers aus Katalysator (50) an der Oberfläche des Mikromusters;
- Wachstum der Nanofasern aus dem Katalysatorhöcker, wobei das Verfahren zudem folgende Schritte beinhaltet:
- Ablagern einer "Gift" (4) genannten Schicht, wobei die "Gift" genannte Schicht eine Katalysatorschicht ist, welche jegliches späteres Benetzen verhindert, oder eine Schicht, welche den Effekt eines später in dem Wachstumsverfahren abgelagerten Katalysators zunichte machen kann, oberhalb der Basis, und wobei auf deren Höhe kein Nanofaser-Wachstumskatalyseeffekt erzielt werden kann;
- Ablagern einer Katalysatorschicht (5) oberhalb der oberen Seite und oberhalb der "Gift" (4) genannten Schicht, wobei die "Gift" genannte Schicht nicht auf Höhe der oberen Seite vorhanden ist und die Dicke der "Gift" genannten Schicht sowie die Dicke der Katalysatorschicht so gestaltet sind, dass die Nanofasern weder an den seitlichen Wänden noch auf der Basis der zuvor erstellten Mikromuster wachsen können;
- einen Schritt des Entfeuchtens, welcher es ermöglicht, den Katalysator oberhalb der oberen Seite durch Erhitzen des Substrates, welches das mit der Katalysatorschicht und der "Gift" genannten Schicht bedeckte Mikromuster beinhaltet, zu einem Tropfen (50) zu formen;
- einen Schritt des Wachstums von Nanofasern an der Oberfläche des Katalysatortropfens, wobei die "Gift" genannte Schicht auf Höhe der Basis vorhanden ist.

2. Verfahren zur Herstellung von Nanofasern nach Anspruch 1, **dadurch gekennzeichnet, dass** die Herstellung des Mikromusters folgende Schritte beinhaltet:
- Ablagern einer Materialschicht, genannt harte Maske (2), welche ein Verhalten bei Trockengravur aufweist, welches sich von demjenigen des Substrates unterscheidet;
- Ablagern einer Schicht Fotoresistmaterial (3), welches in der Lage ist, unter Einwirkung einer Besonnung an der Oberfläche der harten Maske unlöslich zu werden;
- Besonnen des Fotoresistmaterials durch eine Maske (M), um so einen unlöslichen Abschnitt innerhalb der Schicht aus Fotoresistmaterial zu definieren;
- Auflösen der Schicht aus Fotoresistmaterial am Umfang des unlöslichen Elementes, um so ein unlösliches Element (30) zu definieren;
- Gravieren der harten Maske am Umfang des unlöslichen Elementes, um so einen Gravurhöcker (20) zu definieren;
- wobei die Gravur des Substrates zur Herstellung von mindestens einem Mikromuster (11) an der oberen Seite des an der oberen Seite mit dem Gravurhöcker (20) und dem unlöslichen Element (30) bedeckten Substrates;

3. Verfahren zur Herstellung von Nanofasern nach Anspruch 2, **dadurch gekennzeichnet, dass** die Gravur der harten Maske eine anisotrope Gravur ist.

4. Verfahren zur Herstellung von Nanofasern nach einem der Ansprüche 2 oder 3, **dadurch gekennzeichnet, dass** die Gravur des Substrates ein Schritt der chemischen Gravur ist.

5. Verfahren zur Herstellung von Nanofasern nach Anspruch 4, **dadurch gekennzeichnet, dass** die Herstellung eines Mikromusters einen Schritt der Trockengravur nach dem Schritt des chemischen Angriffs in einer Weise beinhaltet, dass ein Mikromuster gebildet wird, welches in Bezug auf das Substrat erhaben genannt wird, wobei das Mikromuster einen ersten Abschnitt (111) aufweist, welcher gerade seitliche Wände aufweist und einen zweiten Abschnitt (112), welcher konvergierende seitliche Wände aufweist.

6. Verfahren zur Herstellung von Nanofasern nach Anspruch 5, **dadurch gekennzeichnet, dass** der Zwischenschritt der Trockengravur eine Gravur vom Typ R.I.E. ist.

7. Verfahren zur Herstellung von Nanofasern nach Anspruch 6, **dadurch gekennzeichnet, dass** die Dicke der Katalysatorschicht kleiner als einige Zehn Nanometer ist.

8. Verfahren zur Herstellung von Nanofasern nach Anspruch 7, **dadurch gekennzeichnet, dass** die Dicke der Katalysatorschicht kleiner als rund fünfzig Nanometer ist.

9. Verfahren zur Herstellung von Nanofasern nach Anspruch 7 oder 8, **dadurch gekennzeichnet, dass** die "Gift" genannte Schicht aus einem gleichen Material wie die Katalysatorschicht besteht und eine Dicke aufweist, welche größer als rund fünfzig Nanometer ist.

10. Verfahren zur Herstellung von Nanofasern nach einem der Ansprüche 1 bis 9, **dadurch gekennzeichnet, dass** die Querschnittsabmessungen des Mikromusters einige Hundert Nanometer betragen.

11. Verfahren zur Herstellung von Nanofasern nach einem der Ansprüche 1 bis 10, **dadurch gekennzeichnet, dass** der Schritt des Erhitzens bei einer Temperatur erfolgt, welche zwischen 300 °C und 800 °C liegt.

12. Verfahren zur Herstellung von Nanofasern nach einem der Ansprüche 1 bis 11, **dadurch gekennzeichnet, dass** das Substrat aus Silizium besteht.

13. Verfahren zur Herstellung von Nanofasern nach einem der Ansprüche 2 bis 12, **dadurch gekennzeichnet, dass** die Schicht der harten Maske aus Silizium besteht.

14. Verfahren zur Herstellung von Nanofasern nach einem der Ansprüche 2 bis 12, **dadurch gekennzeichnet, dass** die Schicht der harten Maske aus einem Nitrid vom Typ NiₓSi_{y}- Nitrid besteht.

15. Verfahren zur Herstellung von Nanofasern nach einem der Ansprüche 1 bis 14, **dadurch gekennzeichnet, dass** die "Gift" genannte Schicht eine Nickelschicht mit einer Dicke von über mehreren Zehn Nanometern ist.

16. Verfahren zur Herstellung von Nanofasern nach einem der Ansprüche 1 bis 14, **dadurch gekennzeichnet, dass** die "Gift" genannte Schicht eine Kupfer- oder Molybdän- oder Wolframschicht ist.

17. Verfahren zur Herstellung von Nanofasern nach einem der Ansprüche 1 bis 16, **dadurch gekennzeichnet, dass** die Katalysatorschicht eine Nickel- oder Eisen- oder Kobaltschicht oder eine Palladium-Nickellegierung ist.

## Claims

1. A nanofiber fabrication method comprising nanofiber growth from a catalyst zone, furthermore comprising the following steps:
- producing at least one micropattern (11) on the surface of a substrate (1); which pattern comprises a base, at least partially convergent side walls and an upper face;
- producing a catalyst zone (50) on the surface of said micropattern;
nanofiber growth from the catalyst zone, said method furthermore comprising the steps of:
- depositing a so-called "poison" layer (4), said so-called "poison" layer being a catalyst layer, preventing ulterior wetting, or a layer capable of annihilating the effect of a catalyst deposited later then the growth method, above said base and on the level on which no nanofiber growth catalysis effect can take place,
- depositing a catalyst layer (5) above said upper surface and above said "poison" layer (4) on the level of said base, said "poison" layer not being present on the level of said upper face, the thickness of the "poison" layer and the thickness of the catalyst layer being such that the nanofibers cannot grow either on the side walls or on the base of the micro patterns constructed beforehand.
- a dewetting operation allowing the catalyst to be formed into a droplet (50) above said upper surface by heating the substrate comprising the micropattern covered with the catalyst layer and said "poison" layer;
- a nanofiber growth operation on the surface of the catalyst-droplet, said so-called "poison"-layer being present on the level of said base.

2. The nanofiber fabrication method as claimed in claim 1, in which the production of the micropattern comprises the following steps:
- depositing a layer of so-called hard mask material (2) having a dry etching behavior different from that of the substrate;
- depositing a layer of photoresistive material (3) capable of becoming insoluble under the effect of exposure on the surface of said hard mask;
- exposing said photoresistive material through a mask (M) so as to define an insoluble part within the layer of photoresistive material;
- dissolving the layer of photoresistive material at the periphery of the insoluble part so as to define an insoluble element (30);
- etching the hard mask at the periphery of the insoluble element so as to define an etch zone (20);
- etching the substrate, leading to the production of at least one micropattern (11) on the surface of the substrate covered with the etch zone (20) and the insoluble element (30) on its upper face.

3. The nanofiber fabrication method as claimed in claim 2 in which the etching of the hard mask is anisotropic etching.

4. The nanofiber fabrication method as claimed in one of claims 2 or 3, in which the etching of the substrate is a chemical etching operation.

5. The nanofiber fabrication method as claimed in claim 4, in which the micropattern production comprises a dry etching step following the chemical attack operation so as to constitute a micropattern referred to as elevated relative to the substrate, said micropattern having a first part (111) with straight side walls and a second part (112) with convergent side walls.

6. The nanofiber fabrication method as claimed in claim 5, in which the intermediate dry etching operation is etching of the R.I.E. type.

7. The nanofiber fabrication method as claimed in claim 6, in which the thickness of the catalyst layer is less than roughly a few tens of nanometers.

8. The nanofiber fabrication method as claimed in claim 7, in which the thickness of the catalyst layer is less than about fifty nanometers.

9. The nanofiber fabrication method as claimed in claim 7 or 8, in which the "poison" layer is made of the same material as the catalyst layer, and has a thickness of more than about fifty nanometers.

10. The nanofiber fabrication method as claimed in one of claims 1 to 9, in which the cross-sectional dimensions of the micropattern are of the order of a few hundreds of nanometers.

11. The nanofiber fabrication method as claimed in one of claims 1 to 10, in which the heating operation is carried out at a temperature of between about 300 degrees and 800 degrees.

12. The nanofiber fabrication method as claimed in one of claims 1 to 11, in which the substrate is made of silicon.

13. The nanofiber fabrication method as claimed in one of claims 2 to 12, in which the hard mask layer is made of silica.

14. The nanofiber fabrication method as claimed in one of claims 2 to 12, in which the hard mask layer is made of a nitride of the NiₓSi_{y} nitride type.

15. The nanofiber fabrication method as claimed in one of claims 1 to 14, in which the "poison" layer is a layer of nickel with a thickness of more than a few tens of nanometers.

16. The nanofiber fabrication method as claimed in one of claims 1 to 14, in which the "poison" layer is a layer of copper or molybdenum or tungsten.

17. The nanofiber fabrication method as claimed in one of claims 1 to 16, in which the catalyst layer is a layer of nickel or iron or cobalt or a palladium-nickel alloy.
